# EUROPÄISCHE PATENTSCHRIFT

(11) **EP 3 088 376 B1**
(45) Veröffentlichungstag und Bekanntmachung des Hinweises auf die Patenterteilung: **02.01.2019**
(21) Anmeldenummer: 16159082.3
(22) Anmeldetag: 08.03.2016
(51) Int. Cl.: C04B 41/72

(54) **ANORDNUNG ZUR DURCHFÜHRUNG EINES VERFAHRENS ZUM ELEKTROCHEMISCHEN CHLORIDENTZUG AN EINER KORROSIONSGESCHÄDIGTEN STAHLBETONFLÄCHE**
ASSEMBLY FOR PERFORMING A METHOD FOR ELECTROCHEMICAL CHLORIDE EXTRACTION ON A CORROSION-DAMAGED REINFORCED CONCRETE SURFACE
SYSTEME D'EXECUTION D'UN PROCEDE DESTINE A L'EXTRACTION ELECTROCHIMIQUE DU CHLORURE SUR UNE SURFACE EN BETON ARME ENDOMMAGEE PAR LA CORROSION

(30) Priorität: 30.04.2015 DE 102015106706
(43) Veröffentlichungstag der Anmeldung: 02.11.2016
(73) Patentinhaber: CITec Concrete Improvement Technologies GmbH, 01156 Dresden (DE)
(72) Erfinder: Dr. Schneck, Ulrich, 01156 Dresden (DE); Jackobasch, Andreas, 01640 Coswig (DE)
(74) Vertreter: Kaufmann, Sigfrid

(56) Entgegenhaltungen:
- WO-A1-01/19755

## Beschreibung

Die Erfindung betrifft eine Anordnung, umfassend mehrere Kombinationselektroden, für die elektrochemische Instandsetzung einer weitestgehend ebenen, geneigten, vertikalen oder horizontal über Kopf befindlichen, korrosionsgeschädigten Stahlbetonfläche.

Der hierin verwendete Begriff "Kombinationselektrode" beschreibt ein Element für die elektrochemische Instandsetzung von korrosionsgeschädigtem Stahlbeton, das zumindest die folgenden Komponenten umfasst: eine dimensionsstabile Elektrode und ein (wiederverwendbares) Entsalzungsmaterial, das aus einem Elektrolytspeicher und einem anionischen Ionenaustauscher besteht.

Unter dem Begriff "Stahlbetonfläche" werden im Folgenden allgemein Wände bzw. Wandungen, Bodenplatten und/oder Decken bzw. Deckplatten aus Stahlbeton verstanden.

Stahlbeton besteht aus sehr druckfestem Beton (ein dichtes, mit Zementleim "verklebtes" Zuschlaggerüst) und einer Bewehrung aus Stahl, mit der hohe Zugkräfte übertragen werden können. Bei einem fehlerfrei hergestellten Betonelement ist die Bewehrung mit einer so starken Betonschicht überzogen, dass sie in der Regel dauerhaft vor Korrosion geschützt ist. Der Korrosionsschutz beruht hierbei auf der Alkalität des in den Poren des Betons angesammelten Wassers, das einen pH-Wert größer als 12,5 aufweist. Auf der Stahloberfläche bildet sich unter diesen Bedingungen eine dünne, festhaftende Oxidschicht, die eine Korrosion des Stahlelements praktisch vollständig verhindert. Aus diesem Grund kann Stahlbeton für Bauteile, die der Witterung ausgesetzt sind, verwendet werden.

Unter ungünstigen Bedingungen, insbesondere bei fehlerhafter Bauausführung oder besonders salzhaltigen Umgebungsbedingungen, kann jedoch der Korrosionsschutz der Bewehrung beeinträchtigt werden. Dabei erfolgt, wenn Kohlendioxid aus der Luft mit den alkalischen Bestandteilen des Zements reagiert, eine Carbonatisierung des Betons. Damit sinkt der pH-Wert, sodass kein Korrosionsschutz mehr gegeben ist.

Eine weitere, häufig auftretende Korrosionsursache ist das Eindringen von Chloriden in den Beton, beispielsweise bei Einsatz der Betonbauteile als Fahrbahn oder in der Nähe einer Fahrbahn beim Einsatz von Tausalz.

Beide Prozesse beginnen an der Betonoberfläche und setzen sich ins Innere des Betons zu den dort einbetonierten Stahlteilen fort, wobei sich deren Oxidschicht auflöst. Um die Zerstörung des Betons durch Abplatzen infolge voluminöser Korrosionsprodukte zu verhindern, muss der chloridhaltige Beton ausgetauscht oder das Chlorid selbst aus dem Beton entfernt werden.

Es sind verschiedene Methoden bekannt, um das kontaminierte Material auszutauschen. Bei konventionellem Betonersatz wird das kontaminierte Material entfernt und durch alkalischen, chloridfreien Beton oder Reprofilierungsmörtel ersetzt. Dabei handelt es sich jedoch um eine aufwendige und somit teurere Lösung, die zudem nur bei Bereichen, die bereits als geschädigt erkannt worden sind, wirksam ist.

Deshalb ist eine zerstörungsfreie Methode vorgeschlagen worden, bei der die Chloride elektrochemisch durch lonenmigration aus dem Beton entfernt werden. Auf diese Weise wird die Chloridkonzentration in dem Beton drastisch verringert, sodass ein Austausch des Betons nicht mehr notwendig ist. Die von J. E. Slater in Materials Performance, 1976, 21-26, beschriebene Methode umfasst die Anwendung eines elektrischen Potentials zwischen der inneren Stahlbewehrung und einer Oberflächenelektrode, die in einen flüssigen Elektrolyten, der sich auf der Oberfläche des Betons befindet, eingetaucht ist. Dabei bildet die Oberflächenelektrode den positiven Pol des elektrischen Feldes, wodurch die in dem Beton enthaltenen, negativ geladenen Chloridionen durch den Beton migrieren, aus diesem austreten und in den Elektrolyt gelangen. Im Elektrolyt werden die Chloridionen an der positiven Elektrode zu gasförmigem Chlor oxidiert oder reagieren chemisch mit in dem Elektrolyt enthaltenen Komponenten.

Allerdings hat die von Slater vorgeschlagene Methode mehrere Nachteile: Zum einen benötigt diese Methode die Anwendung von Spannungen zwischen 100 und 120 V. Derart hohe Spannungen, die über einen Zeitraum von 24 Stunden angewendet werden müssen, um ca. 90 % der Chloride in dem Beton zu entfernen, sind aus sicherheitstechnischen Gründen nicht akzeptabel. Außerdem können die damit entstehenden Kosten sogar die herkömmlicher Techniken übersteigen. Zum anderen wird der verwendete flüssige Elektrolyt von Dämmen zurückgehalten, die auf der Betonoberfläche geschaffen werden müssen. Dies bedeutet einen hohen Aufwand zur Vorbereitung des Chloridentzugs, wobei die Anwendbarkeit der Methode darüber hinaus stark eingeschränkt ist, da sie nur bei horizontalen Betonflächen einsetzbar ist. Ein weiterer Nachteil dieser Methode ist, dass die im Stahlbeton vorhandenen Inhomogenitäten (Betondeckung, Betondichte, Feuchtegehalt, Bewehrungsdichte bezogen auf die Betonoberfläche), die bei der gewünschten großflächigen Bauteilbehandlung zu stark unterschiedlicher Verfahrensintensität führen, nicht berücksichtigt werden.

US 5 228 959 A schlägt als Elektrolyt eine haftende Beschichtung vor, die an vertikalen Oberflächen oder sogar an den Unterseiten von Betonelementen aufgebracht werden kann und an diesen haftet. In die haftende Beschichtung wird eine Elektrode eingebettet, die den positiven Pol des elektrischen Systems bildet. Wenn das Verfahren beendet ist, das heißt, wenn das Niveau der Chloridkontamination auf ein gewünschtes Niveau verringert worden ist, werden sowohl die haftende Beschichtung als auch die Elektrode von der Betonfläche entfernt. Obwohl dieses Verfahren eine Reihe von Vorteilen gegenüber der von Slater vorgeschlagenen Methode bietet, hat es den Nachteil, dass das elektrochemische System nur einmal verwendet werden kann. Eine Wiederverwendung ist nicht möglich. Auch wenn in US 5 228 959 A angegeben wird, dass das verwendete Material einfach und billig entsorgt werden könne, so ist diese aus Sicht der sich verschärfenden Umweltstandards und der zunehmenden Verteuerung der Entsorgung nicht mehr hinnehmbar. Überdies ist die mit dem Einsatz des Verfahrens verbundene Freisetzung von Chlor außerordentlich umweltfeindlich.

Mehrere Druckschriften schlagen eine Modifikation dieses Verfahrens vor. Beispielsweise beschreibt EP 0 398 117 A2 ein Material für die haftende Elektrolytschicht in Form von Zellulosebrei, der mit Wasser oder einer anderen Lösung wie Calciumhydroxid in einer Düse vorgemischt und auf die Oberfläche des zu behandelnden Bereiches aufgesprüht wird. Ebenso schlägt diese Anmeldung für die Elektrode ein eisenhaltiges Material vor, das gegenüber Chlor reaktiv ist, um die Freisetzung von freiem Chlorgas in die Umgebung zu minimieren. Dies bietet den Vorteil, dass zwar weniger Chlor in die Umgebung freigesetzt wird, hat jedoch den Nachteil, dass die Bildung von Chlor nicht vollständig unterdrückt wird. Überdies wird so die Elektrode im Laufe der Anwendung des Verfahrens zersetzt, sodass auch aus diesem Grund nur ein einmaliger Einsatz möglich ist.

EP 1 216 214 B1 beschreibt eine mehrfach wiederverwendbare, vorgefertigte Kombinationselektrode, die für die Sanierung von korrosionsgeschädigtem Stahlbeton einfach auf demselben fixiert wird, und ein Verfahren zu deren Ansteuerung. Die Kombinationselektrode umfasst eine dimensionsstabile Elektrode mit einem vorgefertigten, wiederverwendbaren Elektrolytspeicher und einem vorgefertigten, wechselbaren, anionischen Chloridadsorberelement. Zur Befestigung an dem Stahlbeton ist eine Zentralbefestigung mit Dübel, Ankerstange und Exzenter-Schnellspannvorrichtung vorgesehen. Nachteil dieser Kombinationselektrode ist der hohe Aufwand zur Installation auf einer größeren, zu sanierenden Stahlbetonfläche, da - bei einer Vielzahl auf dem Stahlbeton zu platzierender Elektroden - für jede eine Sackbohrung mit einem Durchmesser von mehr als 12 mm im Beton zur Aufnahme des Dübels und der Ankerstange notwendig ist.

Es ist daher Aufgabe der vorliegenden Erfindung, eine Anordnung zur großflächigen elektrochemischen Sanierung von korrosionsgeschädigtem Stahlbeton vorzuschlagen, die die oben beschriebenen Nachteile des Standes der Technik überwindet, wobei insbesondere eine kostengünstige Lösung bereitgestellt werden soll, die mit geringem technischem und personellem Aufwand für Montage und Betrieb verbunden und auch an senkrechten oder geneigten Stahlbetonwänden bzw. an Stahlbetondecken mehrmals einsetzbar ist.

Erfindungsgemäß wird dies durch eine Anordnung nach Anspruch 1 zur Durchführung eines Verfahrens zum elektrochemischen Chloridentzug an einer korrosionsgeschädigten, ebenen, vertikalen oder geneigten Stahlbetonfläche gelöst, wobei die Anordnung eine Vielzahl von Elektrodenelementen - beinhaltend eine dimensionsstabile Elektrode als Anode; ein wiederverwendbares Entsalzungsmaterial (bestehend aus Elektrolytspeicher und Chloridadsorber), ein Befeuchtungselement und einen Verdunstungsschutz - ein Befestigungssystem, eine Befeuchtungseinrichtung mit Wasserleitungen, mindestens ein Leistungsschaltteil zur anodischen Regelung, ein Messsystem zur Zustandsbestimmung am Entsalzungsmaterial, eine Mess- und Regeleinheit, ein Hochstromnetzteil sowie elektrische Anschlussleitungen umfasst. Dabei können die Elektrodenelemente, d. h. die dimensionsstabile Elektrode mit dem wiederverwendbaren Entsalzungsmaterial, das Befeuchtungselement und der Verdunstungsschutz, in Form einer Sandwichkonstruktion fest miteinander verbunden sein oder als separate (einen Stapel bildende) Einzelteile vorliegen.

Erfindungsgemäß fungiert der Verdunstungsschutz gleichzeitig als Elektrodenträger, wobei mittels des Befestigungssystems die Elektrodenelemente kraftschlüssig mit der Stahlbetonfläche verbindbar sind, indem auf die Elektrodenträger ein vorgegebener Anpressdruck ausübbar ist bzw. ausgeübt wird.

Das Befestigungssystem umfasst eine Vielzahl von Halterungsleisten, die jeweils an der Stahlbetonfläche befestigbar sind, mit jeweils mehreren daran angelenkten Befestigungselementen zur kraftschlüssigen Befestigung der Elektrodenelemente auf der Stahlbetonfläche.

Im bestimmungsgemäß aufgebautem Zustand der Anordnung sind die Halterungsleisten in parallelen Reihen in der Art zueinander beabstandet an der Stahlbetonfläche befestigt (beispielsweise jeweils mittels zweier Multi-Monti®-Betonschrauben), dass der Abstand zwischen jeweils zwei Reihen der Halterungsleisten etwas größer ist als die Breite eines Elektrodenelementes, wobei mehrere Elektrodenelemente (ebenfalls in einer Reihe) zwischen jeweils zwei Reihen der Halterungsleisten angeordnet sind.

Hierbei ist vorgesehen, dass jedes Elektrodenelement eine erste der beiden Halterungsleisten, zwischen denen es angeordnet ist, kontaktiert. Somit ist zwischen der zweiten Halterungsleiste und dem Elektrodenelement ein Freiraum ausgebildet, wobei die Breite des Freiraums bevorzugt etwa 20 mm, mindestens jedoch dem Außendurchmesser einer Wasserleitung der Befeuchtungseinrichtung, entspricht.

Indem mehrere Elektrodenelemente nebeneinander in einer Reihe angeordnet sind, wobei sie eine erste Reihe von entlang einer Linie angeordneten Halterungsleisten kontaktieren, ist ein durchgängiger Freiraum zwischen der Reihe von Elektrodenelementen und einer zweiten Reihe von entlang einer Linie und parallel zu der ersten Reihe angeordneten Halterungsleisten ausgebildet.

Somit ist es möglich, die Wasserleitungen, die während des Betriebs der Anordnung Wasser von der Befeuchtungseinrichtung zu den Befeuchtungselementen zur Befeuchtung der Elektrodenelemente transportieren, jeweils innerhalb des zwischen einer Reihe von Elektrodenelementen und einer Reihe von Halterungsleisten ausgebildeten Freiraums zu verlegen.

Die an die Halterungsleisten angelenkten Befestigungselemente sind derart gestaltet, dass sie in einer ersten Ausrichtung (dem geöffneten Zustand) das Einsetzen bzw. Herausnehmen von Elektrodenelementen zwischen zwei benachbart angeordneten Reihen von Halterungsleisten nicht behindern.

In einer zweiten Ausrichtung (dem geschlossenen Zustand) drücken die Befestigungselemente in der Art auf die Elektrodenträger der Elektrodenelemente, dass die Elektrodenelemente (mit einer vorgegebenen Kraft) kraftschlüssig mit der zu sanierenden Stahlbetonfläche verbunden sind.

Die in einer Reihe angeordneten Elektrodenelemente können derart angeordnet sein, dass sie jeweils eines oder alle beide der benachbarten Elektrodenelemente kontaktieren.

Bezogen auf das zu sanierende Bauteil ist jedes Elektrodenelement kleinflächig (vorzugsweise ca. 0,6 x 0,6 m).

Gemäß der Erfindung sind mehrere Elektrodenelemente elektrisch zu einer Gruppe, d. h. Funktionseinheit, zusammengefasst. Beispielsweise können dreißig Elektrodenelemente eine Funktionseinheit bilden.

Jeweils ein Elektrodenelement einer Elektrodenelementgruppe weist zusätzlich ein Messsystem mit Messsensoren, ein Leistungsschaltteil und eine Referenzelektrode auf. Dieses Elektrodenelement wird im Folgenden als "Aktiv-Elektrodenelement" bezeichnet.

Das Messsystem und das Leistungsschaltteil jedes Aktiv-Elektrodenelements sind mit der Mess- und Regeleinheit verbunden, wobei das Leistungsschaltteil außerdem über die Mess- und Regeleinheit an das Hochstromnetzteil angebunden ist. Überdies ist jedes weitere Elektrodenelement einer Gruppe über elektrische Leitungen mit dem Aktiv-Elektrodenelement dieser Gruppe bzw. dessen Leistungsschaltteil verbunden.

Für die Verkabelung der Elektrodenelemente sowohl untereinander als auch mit der Mess- und Regeleinheit ist das standardisierte Ethernet-Netzwerk vorgesehen.

Im Betriebszustand der Anordnung werden die Messdaten der Aktiv-Elektrodenelemente von der Mess- und Regeleinheit ausgelesen und entsprechend dieser Werte die Leistungsschaltteile der einzelnen Gruppen angesteuert. Somit ist die ganze Gruppe entsprechend der Messwerte des Aktiv-Elektrodenelements dieser Gruppe ansteuerbar, d. h. es wird dieselbe Spannung an alle Elektroden dieser Gruppe angelegt bzw. die angelegte Spannung gleichzeitig für alle Elektrodenelemente der Gruppe abgeschaltet.

Dabei bestimmen die am Aktiv-Elektrodenelement gemessenen Werte (z. B. des Chloridgehalts, der Feuchte, des Stromflusses etc.) die Mess-, Regel- und Abbruchkriterien der gesamten Gruppe. Somit werden beispielsweise aufgrund der Messwerte Zeitabschnitte festgelegt, während der eine Spannung anliegt und Zeitabschnitte ohne extern angelegter Spannung, wobei diese Zeitabschnitte wechselweise aufeinander folgen.

Wenn die Anordnung mehrere Elektrodenelementgruppen umfasst, so kann vorgesehen sein, die Gruppen wechselweise zu an- bzw. abzuschalten, sodass im Betriebszustand immer nur etwa die Hälfte der Gruppen mit einem Gleichstrom beaufschlagt ist.

Die erfindungsgemäße Anordnung bietet den Vorteil, dass die sie aufbauenden Einzelkomponenten industriell vorgefertigt werden können. Überdies enthält sie alle Komponenten, die für eine aktive Verfahrenssteuerung notwendig sind. Die mehrteilig aufgebauten Elektrodenelemente lassen die Regenerierung des lonenaustauschmaterials im Rahmen einer Wiederaufbereitung der Kombinationselektroden zu.

Ein wesentlicher Vorteil der Erfindung ist, dass die Anordnung mit geringem technischem und personellem Aufwand aufgebaut werden kann. Da jedes Elektrodenelement (als eine Einheit) lediglich mittels der an den Halterungsleisten angelenkten Befestigungselemente auf die Stahlbetonfläche aufgedrückt wird, entfallen langwierige Bohrarbeiten, wie für die Befestigung von Kombinationselektroden aus dem Stand der Technik erforderlich. Lediglich vergleichsweise kleine (z. B. mit einem Durchmesser von 6 mm) Bohrungen zur Befestigung der Halterungsleisten sind erforderlich.

Einzelne, beispielsweise defekte, Elektrodenelemente lassen sich bei der erfindungsgemäßen Anordnung in kurzer Zeit austauschen, wobei die Notwendigkeit einer erneuten Einbringung einer Bohrung in den Stahlbeton entfällt.

Ein weiterer Vorteil ist, dass kein aktives Chlor gebildet wird. Die dem Beton entzogenen Chloridionen werden an das lonenaustauschmaterial der Elektrodenelemente gebunden, aus dem sie durch eine Regenerierung dieses Materials wieder entfernt werden können. Die einzelnen Elektrodenelemente sind daher wiederverwendbar.

Vorzugsweise ist die dimensionsstabile Elektrode, d. h. die Anode, gitterförmig ausgebildet und besteht aus oberflächenmodifiziertem Titan, Tantal oder ähnlichen Materialien.

Es kann vorgesehen sein, dass jedes Elektrodenelement einen Elektrodenträger und eine Gewebetasche umfasst, wobei die Gewebetasche das Entsalzungsmaterial und die Anode umschließt, d. h., die Anode ist innerhalb der Gewebetasche angeordnet und das Entsalzungsmaterial (umfassend einen Elektrolytspeicher und einen Chloridadsorber) ist in die Tasche eingefüllt. Die Gewebetasche übernimmt hierbei die Funktion des Befeuchtungselementes. Es kann auch ein zusätzliches Vlies (dessen Dicke größer als die des Gewebes der Gewebetasche ist) als Befeuchtungselement eingesetzt sein.

Der Elektrolytspeicher kann aus faserigem mineralischem Material, vorzugsweise aus Glasvlies bestehen. Damit verhält er sich unter extrem sauren oder basischen Belastungen chemisch neutral, Verfärbungen auf der Betonoberfläche werden vermieden; zudem ist er geometrisch beständig und verfügt über ein gutes Wasserspeichervermögen.

Die Sensorik zur on-line-Zustandskontrolle des Entsalzungsmaterials bzw. des Chloridadsorbers kann derart ausgebildet sein, dass zwischen Entsalzungsmaterial und dimensionsstabiler Elektrode ein Meßsystem zur Überwachung des Verbrauchszustandes eingebaut ist, das über die Mess- und Regeleinheit zyklisch abgetastet wird. Hierzu ist in die Kombinationselektrode eine Hilfselektrode oder ein Chloridsensor integriert, wobei beim Auftreffen von Chloridionen auf die Hilfselektrode ein messbares Signal entsteht.

Gemäß einer Ausgestaltungsvariante entspricht die Höhe der Halterungsleisten (auf der Stahlbetonfläche) der Höhe der Elektrodenelemente, sodass in montiertem Zustand der Anordnung die Halterungsleisten und die Elektrodenelemente die gleiche Höhe über der Stahlbetonfläche aufweisen. Die an die Halterungsleisten angelenkten Befestigungselemente können beispielsweise quaderförmige Hebel sein, die um eine Achse senkrecht zur Stahlbetonfläche drehbar sind. In geöffnetem Zustand sind die Hebel parallel zur Halterungsleiste ausgerichtet, in geschlossenem Zustand senkrecht zur Halterungsleiste in der Art, dass sie über die Halterungsleiste überstehen und somit eine Kraft auf die Elektrodenelemente bzw. deren Elektrodenträger ausübbar ist. Diese Hebel sind manuell mit nur geringem Kraftaufwand, d. h. ohne Werkzeug, drehbar.

Das Verfahren zur Ansteuerung der Elektrodenelemente bzw. der Kombinationselektroden bei gruppenweise zusammengeschalteten Elektrodenelementen mit jeweils einem Aktiv-Elektrodenelement zielt auf die kurzzeitige elektrochemische Sanierung von korrosionsgeschädigtem Stahlbeton und erfolgt nach folgenden Verfahrensschritten:
- das Festlegen von Meß-, Regel- und Abbruchkriterien für jede einzelne Gruppe;
- die zyklische Zuführung von Gleichstrom zu den Elektroden und das Abschalten des Gleichstromes unter permanenter Überwachung des Referenzpotentials, der Spannungsänderung am Chloridsensor und der Ausschaltflanke am Aktiv-Elektrodenelement, wobei jede der zyklisch aufeinanderfolgenden Phasen (mit Stromfluss bzw. stromlos) über mehrere Stunden aufrecht gehalten wird.

Der Durchführung des Verfahrens geht eine Untersuchung der instandzusetzenden Bauteilflächen in bezug auf deren spezifische Merkmale wie beispielsweise dem Abstand der Mantelfläche der Deckbewehrung als Arbeitselektrode sowie die Ermittlung der durchschnittlichen und minimalen Betonüberdeckung voraus. Die Kontrollmessungen dienen gleichzeitig der Prüfung der elektrischen Verbindungen sowie dem Erreichen eines niedrigen Elektrolytwiderstandes im Beton, indem eine ausreichende Bauteilfeuchte sichergestellt wird.

Die Abbruchkriterien, die während der gesamten Laufzeit der Instandsetzung an jeder Elektrodenelementgruppe überwacht werden, werden ausgewählt aus der im Chloridadsorber enthaltenen Gesamtchloridmenge, die der Differenz zwischen dem Chloridgehalt zu Sanierungsbeginn (Cl_{Start}) und dem Ziel-Chloridgehalt (Cl_{End}) im Beton entspricht; den Chloridgehalten im Beton an überwachten Prüfstellen und der eingetragenen Ladungsmenge.

Durch die permanente Abfrage des Chloridsensors kann die Sättigung des Chloridadsorbers in dem Aktiv-Elektrodenelement genau ermittelt werden. Wenn der Chloridadsorber gesättigt ist, wird der Chloridentzug automatisch für die betreffende Elektrodenelementgruppe unterbrochen, damit keine Chlorgasentwicklung an der Anode auftreten kann. Gleichzeitig wird die Chloridmenge, die der Aufnahmekapazität des Chloridadsorbers entspricht, als Rechenwert in den Prozess einbezogen. Ist die Kapazität des Chloridadsorbers erschöpft, können die Elektrodenelemente der entsprechenden Gruppe während der Instandsetzung mehrfach erneuert werden.

Im Folgenden wird die Erfindung mit Bezug auf die beiliegenden Zeichnungen näher erläutert. Dazu zeigen in schematischer Darstellung die
Fig. 1 ein Elektrodenelement sowie das Befestigungssystem im Querschnitt, und
Fig. 2 die erfindungsgemäße Anordnung in Schrägdraufsicht.

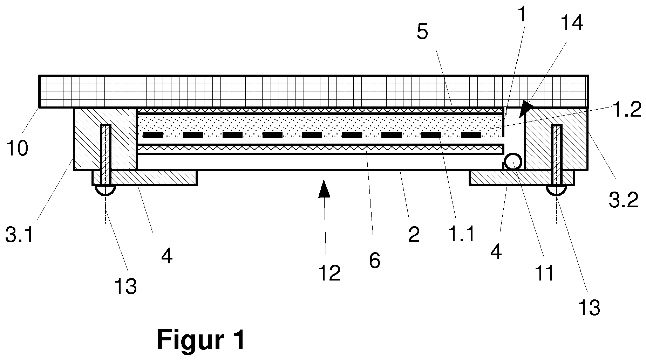

Das in Fig. 1 (nicht maßstäblich) dargestellte, mehrteilige und vorgefertigte Elektrodenelement 12 besteht aus dem Untervlies 5, der Kombinationselektrode 1, umfassend die dimensionsstabile Elektrode 1.1 und das wiederverwendbare Entsalzungsmaterial 1.2, dem Deckvlies 6 und dem Elektrodenträger 2, die als Sandwichkonstruktion miteinander verbunden sind.

Auf der Stahlbetonfläche 10, hier in Form einer Stahlbetondecke, sind die Halterungsleisten 3.1 und 3.2 befestigt. Die jeweils um die Drehachse 13 drehbar an den Halterungsleisten 3.1 bzw. 3.2 angelenkten Befestigungselemente 4 drücken das Elektrodenelement 12 auf die Stahlbetonfläche 10.

Innerhalb des zwischen der Halterungsleiste 3.2 und dem Elektrodenelement 12 ausgebildeten Freiraums 14 verläuft die Wasserleitung 11, die Wasser zu dem Deckvlies 6 und dem Untervlies 5 transportiert.

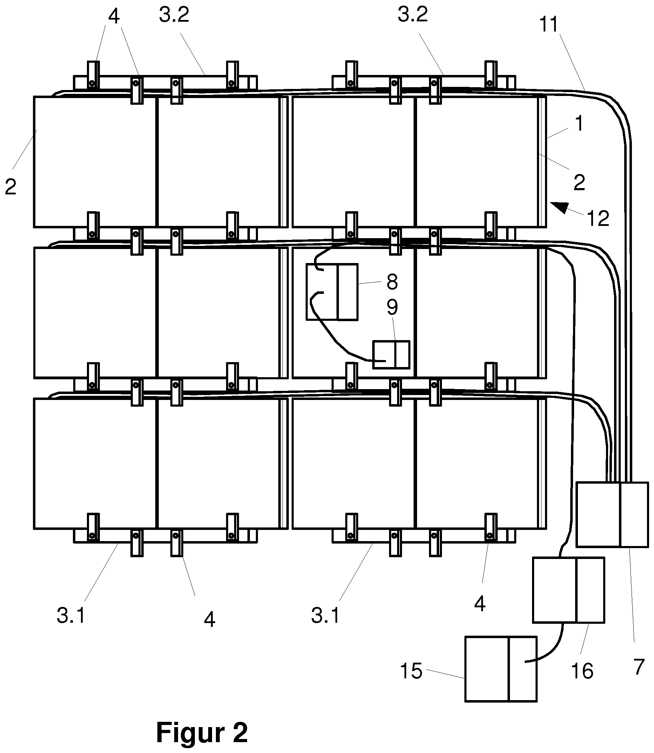

Fig. 2 zeigt eine Elektrodenelementgruppe, hier bestehend aus zwölf Elektrodenelementen 12, der Anordnung beim Einsatz auf einer zu sanierenden Betonwandung (nicht dargestellt).

Die Halterungsleisten 3.1 und 3.2 sind in parallelen Reihen auf die Betonwandung aufgeschraubt. Die Befestigungselemente 4 drücken auf die Elektrodenträger 2 und pressen so die Elektrodenelemente 12 auf die Betonwandung. Eines der Elektrodenelemente, das Aktiv-Elektrodenelement, weist zusätzlich das Leistungsschaltteil zur anodischen Regelung 8 und das Messsystem 9 zur Zustandsbestimmung am Chloridadsorber auf.

Außerdem ist die Anordnung mit der Befeuchtungseinrichtung 7, dem Hochstromnetzteil 15, der Mess- und Regeleinheit 16, den Wasserleitungen 11 sowie elektrischen Anschlüssen ausgestattet.

### Liste der verwendeten Bezugszeichen

- 1: Kombinationselektrode
- 1.1: dimensionsstabile Elektrode
- 1.2: Entsalzungsmaterial
- 2: Elektrodenträger
- 3.1: Halterungsleiste
- 3.2: Halterungsleiste
- 4: Befestigungselement
- 5: Untervlies
- 6: Deckvlies
- 7: Befeuchtungseinrichtung
- 8: Leistungsschaltteil zur anodischen Regelung
- 9: Messsystem zur Zustandsbestimmung an der Kombinationselektrode
- 10: Stahlbetonfläche
- 11: Wasserleitung
- 12: vorgefertigtes, wechselbares Elektrodenelement
- 13: Drehachse
- 14: Freiraum
- 15: Hochstromnetzteil
- 16: Mess- und Regeleinheit

## Patentansprüche

1. Anordnung zur Durchführung eines Verfahrens zum elektrochemischen Chloridentzug an einer korrosionsgeschädigten, ebenen, vertikalen oder geneigten Stahlbetonfläche (10), **dadurch gekennzeichnet, dass** eine Vielzahl von , in mindestens zwei parallelen Reihen und zueinander beabstandet angeordneten, Halterungsleisten (3.1, 3.2) mit daran angelenkten Befestigungselementen (4) und eine Vielzahl von flächenhaften Elektrodenelementen (12), jeweils bestehend aus einer zwischen einem Untervlies (5) und einem Deckvlies (6) angeordneten Kombinationselektrode (1) und einem das Deckvlies kontaktierenden und die Kombinationselektrode (1) ganzflächig abdeckenden Elektrodenträger (2), kraftschlüssig mit der Stahlbetonfläche (10) verbunden sind, wobei zwischen jeweils einer ersten (3.1) und einer zweiten (3.2), parallel zu der ersten (3.1) beabstandet angeordneten, Halterungsleiste jeweils ein Elektrodenelement (12) die Stahlbetonfläche (10) mit dem Untervlies (5) kontaktierend mittels der Befestigungselemente (4) kraftschlüssig mit der Stahlbetonfläche (10) verbunden ist, wobei ein Freiraum (14) zumindest zwischen der zweiten Halterungsleiste (3.2) und dem jeweils benachbart positionierten Elektrodenelement (12) ausgebildet ist, in welchem von den Elektrodenelementen (12) zu einer Mess- und Regeleinheit (16) und/oder zu einem Hochstromnetzteil (15) verlaufende elektrische Leitungen und zu einer Befeuchtungseinrichtung (7) verlaufende Wasserleitungen (11) angeordnet sind.

2. Anordnung nach Anspruch 1, **dadurch gekennzeichnet, dass** ein Elektrodenelement (12) eine Fläche von 0,6 x 0,6 m² aufweist.

3. Anordnung nach einem der Ansprüche 1 bis 2, **dadurch gekennzeichnet, dass** die Kombinationselektrode (1) eine dimensionsstabile Elektrode (1.1) aus oberflächenmodifiziertem Titan oder Tantal aufweist.

4. Anordnung nach einem der vorstehenden Ansprüche, **dadurch gekennzeichnet, dass** ein Elektrolytspeicher der Kombinationselektrode (1) aus faserigem mineralischem Material besteht.

5. Anordnung nach einem der vorstehenden Ansprüche, **dadurch gekennzeichnet, dass** mehrere Elektrodenelemente (12) elektrisch zu jeweils einer Elektrodenelementgruppe verbunden sind, wobei jede Elektrodenelementgruppe ein Leistungsschaltteil (8) zur anodischen Regelung und ein eine Messsensoreneinheit umfassendes Messsystem (9) aufweist.

6. Anordnung nach einem der vorstehenden Ansprüche, **dadurch gekennzeichnet, dass** das Untervlies (5) und das Deckvlies (6) der Elektrodenelemente (12) durch eine Gewebetasche gebildet sind, wobei die Gewebetasche die Kombinationselektrode (1) vollständig umschließt.

7. Anordnung nach einem der vorstehenden Ansprüche, **dadurch gekennzeichnet, dass** der Elektrodenträger (2) eine handelsübliche OSB-Platte ist

8. Anordnung nach einem der vorstehenden Ansprüche, **dadurch gekennzeichnet, dass** das Untervlies (5) eine geringere Dicke aufweist als das Deckvlies (6).

## Claims

1. Assembly for performing a method for electrochemical chloride extraction on a corrosion-damaged, flat, vertical or inclined reinforced concrete surface (10), **characterised in that** multiple clamping strips (3.1, 3.2), arranged at a distance from one another in at least two parallel rows and having fastening elements (4) hinged thereto, and multiple planar electrode elements (12), each consisting of a combination electrode (1) arranged between a non-woven material underlayer (5) and a non-woven material cover layer (6) and an electrode carrier (2) contacting the non-woven material cover layer and covering the entire surface of the combination electrode (1), are connected in a frictionally engaged manner to the reinforced concrete surface (10), wherein, in each case between a first clamping strip (3.1) and a second clamping strip (3.2) arranged at a distance from and parallel to the first clamping strip (3.1), an electrode element (12) is connected in a frictionally engaged manner to the reinforced concrete surface (10) by means of the fastening elements (4) in a manner contacting the reinforced concrete surface (10) with the non-woven material underlayer (5), wherein a clearance (14) is formed at least between the second clamping strip (3.2) and the adjacently positioned electrode element (12), in which clearance there are arranged electrical lines running from the electrode elements (12) to a measurement and control unit (16) and/or to a high-current power supply (15) and water lines (11) running to a wetting device (7).

2. The assembly according to claim 1, **characterised in that** an electrode element (12) has an area of 0.6 x 0.6 m².

3. The assembly according to either one of claims 1 or 2, **characterised in that** the combination electrode (1) comprises a dimensionally stable electrode (1.1) made of surface-modified titanium or tantalum.

4. The assembly according to any one of the preceding claims, **characterised in that** an electrolyte store of the combination electrode (1) consists of fibrous mineral material.

5. The assembly according to any one of the preceding claims, **characterised in that** a plurality of electrode elements (12) are electrically connected in each case to form an electrode element group, wherein each electrode element group comprises a circuit breaker part (8) for anodic control and a measurement system (9) comprising a measurement sensor unit.

6. The assembly according to any one of the preceding claims, **characterised in that** the non-woven material underlayer (5) and the non-woven material cover layer (6) of the electrode elements (12) are formed by a material pocket, wherein the material pocket fully surrounds the combination electrode (1).

7. The assembly according to any one of the preceding claims, **characterised in that** the electrode carrier (2) is a commercially available OSB board.

8. The assembly according to any one of the preceding claims, **characterised in that** the non-woven material underlayer (5) has a smaller thickness than the non-woven material cover layer (6).

## Revendications

1. Installation permettant la mise en oeuvre d'un procédé d'élimination électrochimique des chlorures sur une surface de béton armé (10), endommagée par la corrosion, plane, verticale ou inclinée, **caractérisée en ce qu'**une multiplicité de bandes de support (3.1, 3.2), disposées en au moins deux rangées parallèles espacées l'une par rapport à l'autre, avec des éléments de fixation (4) y étant articulés et une multiplicité d'éléments d'électrode (12) de surface, respectivement constitués d'une électrode de combinaison (1) disposée entre un non tissé inférieur (5) et un non tissé de recouvrement (6), et d'un support d'électrode (2) étant en contact avec le non tissé de recouvrement et recouvrant totalement la surface de l'électrode de combinaison (1), sont reliées par complémentarité des matières avec la surface de béton armé (10), où, entre respectivement une première bande de support (3.1) et une deuxième bande de support (3.2), parallèle à la première bande (3.1) disposée espacée, respectivement un élément d'électrode (12) mettant en contact la surface de béton armé (10) avec le non tissé inférieur (5) au moyen des éléments de fixation (4) est relié par complémentarité des matières avec la surface de béton armé (10), formant ainsi un espace libre (14) au moins entre la deuxième bande de support (3.2) et l'élément d'électrode (12) positionné respectivement au voisinage dans lequel sont disposées des lignes électriques s'étendant à partir des éléments d'électrode (12) vers une unité de mesure et de régulation (16) et/ou vers une alimentation en courant fort (15) et des conduites d'eau (11) s'étendant vers un dispositif d'humidification (7).

2. Installation selon la revendication 1, **caractérisée en ce qu'**un élément d'électrode (12) présente une surface de 0,6 x 0,6 m².

3. Installation selon l'une des revendications 1 à 2, **caractérisée en ce que** l'électrode de combinaison (1) présente une électrode (1.1) de dimensions stables à base de titane ou de tantale modifiés en surface.

4. Installation selon l'une des revendications précédentes, **caractérisée en ce qu'**une réserve d'électrolyte de l'électrode de combinaison (1) est constituée d'une matière minérale fibreuse.

5. Installation selon l'une des revendications précédentes, **caractérisée en ce que** plusieurs éléments d'électrode (12) sont reliés électriquement avec respectivement un groupe d'éléments d'électrode, où chaque groupe d'éléments d'électrode présente une pièce d'inversion de puissance (8) pour la régulation anodique et un système de mesure (9) comprenant une unité de capteurs de mesure.

6. Installation selon l'une des revendications précédentes, **caractérisée en ce que** le non tissé inférieur (5) et le non tissé de recouvrement (6) des éléments d'électrode (12) sont formés par une poche de tissu, la poche de tissu entourant totalement l'électrode de combinaison (1).

7. Installation selon l'une des revendications précédentes, **caractérisée en ce que** le support d'électrode (2) est un panneau OSB usuel du commerce

8. Installation selon l'une des revendications précédentes, **caractérisée en ce que** le non tissé inférieur (5) présente une épaisseur inférieure à celle du non tissé de recouvrement (6).
